(19) Europäisches Patentamt
European Patent Office
Office européen des brevets

(11) **EP 2 018 577 B1**

(12) **EUROPÄISCHE PATENTSCHRIFT**

(45) Veröffentlichungstag und Bekanntmachung des Hinweises auf die Patenterteilung:
**27.04.2011 Patentblatt 2011/17**

(21) Anmeldenummer: **07724846.6**

(22) Anmeldetag: **04.05.2007**

(51) Int Cl.:
***G01S 13/90*** *(2006.01)*

(86) Internationale Anmeldenummer:
**PCT/EP2007/003921**

(87) Internationale Veröffentlichungsnummer:
**WO 2007/131642 (22.11.2007 Gazette 2007/47)**

(54) **HOCHAUFLÖSENDES SYNTHETIK-APERTUR-SEITENSICHT-RADARSYSTEM MITTELS DIGITAL BEAMFORMING**

HIGH-RESOLUTION SYNTHETIC APERTURE SIDE VIEW RADAR SYSTEM USED BY MEANS OF DIGITAL BEAMFORMING

SYSTÈME RADAR HAUTE RÉSOLUTION À VISÉE LATÉRALE ET À OUVERTURE SYNTHÉTIQUE UTILISANT UNE MISE EN FORME DE FAISCEAU NUMÉRIQUE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **13.05.2006 DE 102006022814**

(43) Veröffentlichungstag der Anmeldung:
**28.01.2009 Patentblatt 2009/05**

(73) Patentinhaber: **Deutsches Zentrum für Luft- und Raumfahrt e.V.**
**51147 Köln (DE)**

(72) Erfinder:
• **KRIEGER, Gerhard**
**82131 Gauting (DE)**
• **GEBERT, Nicolas**
**80339 München (DE)**
• **MOREIRA, Alberto**
**82140 Olching (DE)**

(74) Vertreter: **von Kreisler Selting Werner**
**Deichmannhaus am Dom**
**Bahnhofsvorplatz 1**
**50667 Köln (DE)**

(56) Entgegenhaltungen:
**DE-A1-102005 062 031    US-A1- 2003 218 565**
**US-A1- 2005 237 236    US-A1- 2006 152 403**

• **BLISS D W ET AL INSTITUTE OF ELECTRICAL AND ELECTRONICS ENGINEERS: "Multiple-input multiple-output (MIMO) radar and imaging: degrees of freedom and resolution" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY : IEEE, US, Bd. VOL. 1 OF 2. CONF. 37, 9. November 2003 (2003-11-09), Seiten 54-59, XP010701593 ISBN: 0-7803-8104-1**

**Beschreibung**

Technisches Gebiet

Die Erfindung betrifft ein hochauflösendes Synthetik-Apertur-Seitensicht-Radarsystem auf einem sich mit konstanter Geschwindigkeit über der Erdoberfläche bewegenden Träger, auf dem eine orthogonal zur Bewegungsrichtung schräg nach unten blickende Sende- und Empfangsantenne und eine kohärent arbeitende Radarvorrichtung angeordnet sind, die über die Sendeantenne periodisch mit einer Pulswiederholfrequenz Hochfrequenzimpulse aussendet und die über die in Azimut- und/oder in Elevationsrichtung in mehrere Unterantennen unterteilte Empfangsantenne in mehreren Empfangskanälen Echosignale empfängt, die zur Erlangung zusätzlicher Richtungsinformationen mittels einer räumlichen Filterung nach Art des sogenannten "Digital Beamforming" digital verrechnet werden.

Ein derartiges Synthetik-Apertur-Seitensicht-Radarsystem ist z.B. aus BLISS D W ET AL: "Multiple-Input multiple-output (MIMO) radar and imaging: degrees of freedom and resolution" CONFERENCE RECORD OF THE 37TH. ASILOMAR CONFERENCE ON SIGNALS, SYSTEMS, & COMPUTERS. PACIFIC GROOVE, CA, NOV. 9 - 12, 2003, ASILOMAR CONFERENCE ON SIGNALS, SYSTEMS AND COMPUTERS, NEW YORK, NY: IEEE, US, Bd. VOL. 1 OF 2. CONF. 37, 9. November 2003 (2003-11-09), Seiten 54-59, XP010701593, ISBN: 0-7803-8104-1 bekannt; in diesem wissenschaftlichen Artikel sind die Merkmale des Oberbegriffs des Anspruchs 1 beschrieben.

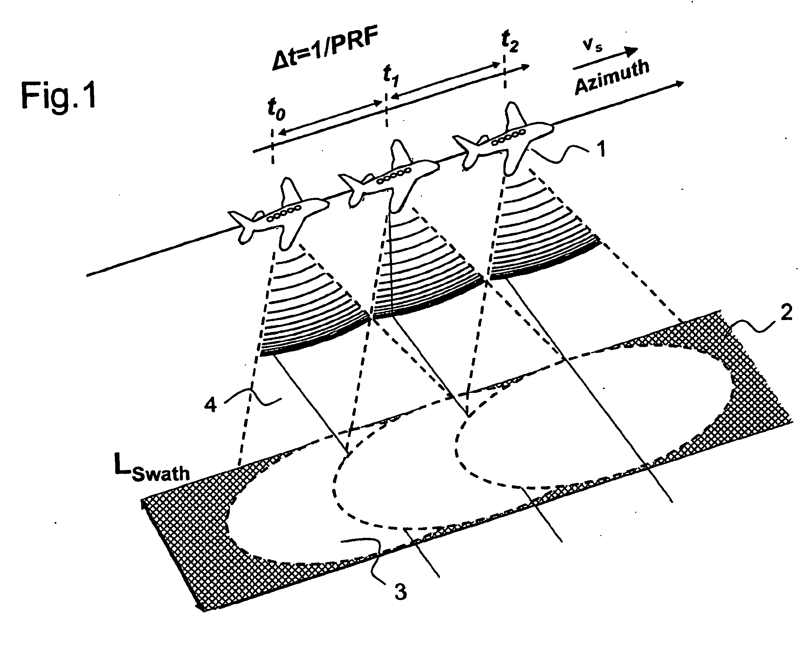

Ein Synthetik-Apertur-Radarsystem, kurz SAR genannt, ist ein Instrument zur Fernerkundung, das in immer stärkerem Maße Einsatz bei der Abbildung, Überwachung und Untersuchung der Erdoberfläche findet. Wie Fig.1 zeigt, weist ein solches Radarsystem einen sich mit konstanter Geschwindigkeit $v_s$ über der Erdoberfläche bewegenden Träger 1, im dargestellten Fall ein Flugzeug, eine orthogonal zur Bewegungsrichtung blickende Sende- und Empfangsantenne und eine kohärent arbeitende Radarvorrichtung auf, welche periodisch mit einer abgekürzt mit PRF bezeichneten Pulswiederholfrequenz elektromagnetische Hochfrequenzimpulse aussendet.

Die Bewegungsrichtung des Trägers 1 wird als Azimutrichtung und die dazu orthogonale, schräg nach unten weisende Richtung als Entfernungsrichtung bezeichnet. Im normalen SAR-Betriebsmodus, der als Streifenmodus bezeichnet wird, wird während des Überflugs über ein zu beobachtendes Gebiet ein Bodenstreifen 2 mit der Länge der überflogenen Strecke abgebildet. Die Breite $L_{Swath}$ des Streifens 2 hängt von der Dauer des Zeitfensters ab, in dem die auf einen gesendeten Impuls reflektierten Radarechos empfangen werden. Die Länge dieses Zeitfensters ist nach oben durch den zeitlichen Abstand $\Delta t$ zweier aufeinanderfolgender Impulse, also dem Kehrwert der Pulswiederholfrequenz PRF, beschränkt. Im dargestellten Beispiel werden die aufeinanderfolgenden Hochfrequenzimpulse zu den Zeiten $t_0$, $t_1$, $t_2$, ... ausgesendet. Die empfangenen Echos werden im Empfänger der Radarvorrichtung heruntergemischt, quadraturdemoduliert, digitalisiert und in einem zweidimensionalen Echospeicher abgelegt.

Von einem punktförmigen Ziel ("Punktziel") am Boden reflektierte Signale werden als Echos empfangen, solange sich das Ziel innerhalb der Auftrefffläche 3 der Antennenkeule 4 befindet. Die Länge der Strecke, während der ein Ziel zum Empfangssignal beiträgt, wird als synthetische Apertur bezeichnet. Als Folge der Variation des Abstandes zwischen Antenne und Punktziel, während die Antenne am Ziel vorbeifliegt, ergibt sich eine Zielentfernungsänderung über der synthetischen Apertur, die zu einer Modulation des empfangenen Azimutsignals führt. Es ergibt sich eine näherungsweise lineare Frequenzmodulation, deren Bandbreite von der Geschwindigkeit der Antenne und ihrer Größe abhängt, da diese festlegt, wie lange sich das Ziel in der Antennenkeule befindet, und somit die Zeit begrenzt, in der Echos vom Ziel empfangen werden.

Dabei gilt es zu beachten, dass die PRF, die die Abtastrate im Azimut darstellt, größer als die Bandbreite der Modulation gewählt wird, um das Azimutsignal gemäß dem Nyquist-Kriterium abzutasten. Die Impulskompression im Azimut wird durch ein Optimalfilter erreicht und bedeutet ein kohärentes Aufsummieren aller zu einer Azimutposition gehörenden Echos. Wurde das Nyquist-Kriterium bei der Abtastung des Azimutsignals verletzt, so führt dies in der Impulskompression zu Mehrdeutigkeiten eines Zieles.

Bei herkömmlichen SAR-Systemen erfordert eine gute Azimutauflösung eine hohe Dopplerbandbreite, die sich aus der Modulation des Empfangssignals auf Grund der bewegten Plattform ergibt. Zur Abtastung eines Azimutsignals mit großer Dopplerbandbreite wird eine hohe PRF benötigt, um das Nyquist-Kriterium zu erfüllen und so Mehrdeutigkeiten im Azimut zu vermeiden.

Im Gegensatz dazu ist zur Erzielung eines breiten Abbildungsstreifens ein langes Empfangsfenster notwendig. Dies erfordert einen ausreichenden zeitlichen Abstand zwischen aufeinanderfolgenden Sendeimpulsen und damit eine möglichst geringe PRF.

Hieraus folgt, dass für eine gute Azimutauflösung eine hohe, für einen breiten Streifen jedoch eine niedrige PRF erforderlich ist. Damit stellen die gleichzeitige Optimierung von Streifenbreite und Azimutauflösung an die Auslegung von SAR-Systemen gegensätzliche Anforderungen, die nicht gleichzeitig erfüllt werden können.

Stand der Technik

Um die Einschränkungen von schmaler Streifenbreite oder zu geringer Auflösung zu umgehen, werden konventionelle SAR-Systeme in speziellen Moden betrieben, die nachfolgend kurz vorgestellt werden. Es gelingt hiermit jedoch nicht, gleichzeitig sowohl die Streifenbreite als auch die Auflösung zu verbessern.

Ein spezieller Betriebsmodus bisheriger konventioneller SAR-Systeme, um eine hohe geometrische Azimutauflösung zu gewährleisten, ist der so genannte Spotlight Modus, der z.B. in dem Buch von Carrara W., Goodman R., Majewski R.: "Spotlight Synthetic Aperture Radar: Signal Processing Algorithms", Boston: Artech House, 1995, beschrieben ist. In dieser Betriebsart werden die Antennenkeulen der Sende- und Empfangsantenne in Azimutrichtung so geschwenkt, dass ein bestimmtes Gebiet möglichst lange beleuchtet wird.

Der Antennenstrahl wird erst maximal in Flugrichtung verschwenkt, um das Ziel möglichst früh zu beleuchten, und dann während des Vorbeiflugs des Sensors dem Zielgebiet nachgeführt, was eine hohe Bandbreite des Azimutsignals und somit eine hohe Auflösung zur Folge hat. Ein fundamentaler Nachteil dieses Betriebsmodus ist allerdings, dass der abzubildende Streifen am Boden nur punktweise in dieser Weise beleuchtet werden kann und somit eine kontinuierliche Beleuchtung nicht möglich ist. Der abgebildete Streifen hat somit zwar eine hohe Auflösung, jedoch auf Kosten von Lücken im Radarbild.

Um eine möglichst große Streifenbreite zu erreichen, wird der so genannte ScanSAR Modus verwendet, der in dem Artikel von A. Currie and M.A. Brown: "Wide-Swath SAR", IEE Proceedings - Radar Sonar and Navigation, 139 (2), Seiten 122-135, 1992, beschrieben ist. Wie der Spotlight-Modus basiert auch der ScanSAR-Modus auf einer Steuerung der Antennenkeulen von Sende- und Empfangsantenne, allerdings in Elevationsrichtung. Hierzu wird der abzubildende Streifen in seiner Breite in mehrere Teilstreifen unterteilt. Jeder dieser Teilstreifen wird nun durch geeignete Steuerung des Antennendiagramms für eine bestimmte Anzahl von Sendeimpulsen beleuchtet.

Dies entspricht einer Verkürzung der synthetischen Apertur, was schlussendlich eine verringerte geometrische Auflösung in Azimutrichtung nach sich zieht. Durch sequentielle Ansteuerung aller Teilstreifen erhält man dann einen breiten Gesamtstreifen, allerdings auf Kosten einer verringerten Azimutauflösung.

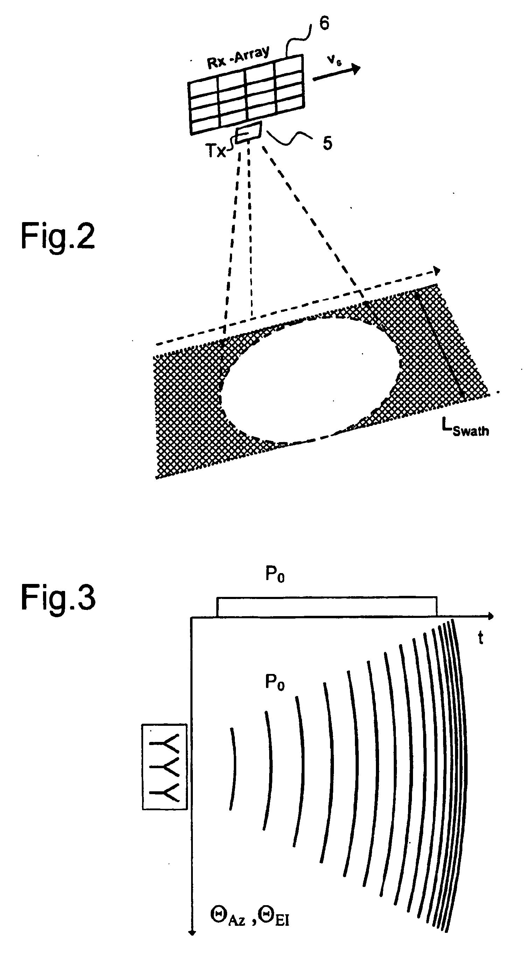

Um die inhärente Beschränkung bezüglich Streifenbreite und geometrischer Auflösung von raumgestützten SAR-Systemen zu überwinden, sind bisher mehrere Verfahren vorgeschlagen worden, die allesamt auf einer Aufspaltung der Empfangsantenne in mehrere Sub-Aperturen mit getrennten Empfangskanälen beruhen. Als Sendeantenne dient jeweils eine kleine Antenne, die gleichzeitig eine große Fläche auf dem Boden ausleuchtet. Ein Beispiel für ein solches bekanntes System mit getrennter Sende- und Empfangsantenne zeigt Fig.2.

Es handelt sich bei dem in Fig.2 dargestellten Beispiel um ein Multi-Apertur-System zur Abbildung breiter Streifen mit hoher geometrischer Auflösung. Die Sendeantenne 5 und die Empfangsantenne 6 befinden sich auf der gleichen Plattform und bewegen sich gemeinsam mit einer Geschwindigkeit $v_s$ über der Erdoberfläche in Azimutrichtung. Die Empfangsantenne 6 ist unterteilt und besteht sowohl im Azimut als auch in der Elevation aus mehreren Antennenelementen. Die Sendeantenne 5 hingegen besteht nur aus einem einzigen Element, das in seinen Abmessungen den Einzelelementen der Empfangsantenne 6 entspricht.

Die Aufspaltung des Empfängers in mehrere getrennte Empfangskanäle ermöglicht es, zusätzliche Informationen über die Richtung des reflektierten Signals zu erhalten. Dies geschieht durch eine häufig auch als "Digital Beamforming on Receive" bezeichnete digitale Verrechnung der einzelnen Sub-Apertursignale. Dabei sind unterschiedliche Varianten möglich, dieses sogenannte "Digital Beamforming" zu realisieren. Es kann entweder a posteriori durchgeführt werden, nachdem das Signal jeder einzelnen Empfangsapertur heruntergemischt, digitalisiert und gespeichert wurde, oder es erfolgt in Echtzeit und nur das Ergebnis dieser digitalen Verrechnung wird aufgezeichnet.

Eine Unterteilung der Empfangsantenne im Azimut mit getrennter digitaler Aufzeichnung der Signale der einzelnen Empfangselemente führt zu einem System, das im Gegensatz zur Verwendung nur einer Empfangsantenne zusätzliche Abtastwerte empfängt, da pro Sendeimpuls in jedem Empfangskanal ein Echo mit leicht unterschiedlicher Antennenposition empfangen wird. Im optimalen Fall erlauben diese zusätzlichen Abtastwerte und eine geeignete a posteriori-Verarbeitung der Signale, die PRF zu verringern ohne dass sich hierdurch stärkere Azimut-Mehrdeutigkeiten ergeben, wie aus dem Artikel von G. Krieger, N. Gebert, A. Moreira: "Unambiguous SAR Signal Reconstruction from Non-Uniform Displaced Phase Centre Sampling", IEEE Geoscience and Remote Sensing Letters, Vol. 1, No. 4, Oct. 2004, hervorgeht. Das wiederum ermöglicht die Abbildung eines breiteren Streifens am Boden.

Die Verwendung von mehreren Empfangsaperturen in der Elevation kann schließlich dazu verwendet werden, Mehrdeutigkeiten in Entfernungsrichtung zu unterdrücken und/oder den Antennengewinn zu erhöhen. Letzteres wird dadurch erreicht, dass eine schmale Antennenkeule erzeugt und diese in Echtzeit so gesteuert wird, dass sie den rückgestreuten Radarimpulsen am Boden folgt, wie aus EP-B-1 241 487 hervorgeht.

Ein wesentliches Merkmal aller bisher vorgeschlagenen Konzepte zur Abbildung eines breiten Streifens mit hoher geometrischer Auflösung ist eine hohe Komplexität auf der Empfangsseite in Verbindung mit einer einzigen, einfachen, separaten Sendeapertur. Die Sendeantenne kann dabei entweder auf der gleichen Plattform wie die Empfängerantenne oder auf einer eigenen Plattform realisiert werden. Dabei besteht die Aufgabe der Sendeantenne einzig und allein darin, die großflächige Beleuchtung des Zielgebiets zu gewährleisten.

Im allgemeinen wird deshalb bei einem a posteriori-Beamforming die Größe der Sendeantenne so gewählt, dass sie nicht größer als die Größe einer Sub-Apertur der Empfangsantenne ist, um eine Beleuchtung auf dem Boden zu gewährleisten, die mindestens der Antennenkeule der Empfangsaperturen entspricht. Im Falle einer Echtzeit-Verarbeitung besteht diese Notwendigkeit nicht zwingend, da hier die minimale Größe durch den abzubildenden Bereich festgelegt wird. Jedoch ist auch in diesen Fällen eine Sendeantenne nötig, die deutlich kleiner ist als die Empfangsantenne, um den geforderten breiten Streifen zu beleuchten.

Demnach beruhen alle bisherigen Vorschläge zur gleichzeitigen Erhöhung von Streifenbreite und geometrischer Auflösung auf der Verwendung einer relativ kleinen, separaten Sendeantenne, die eine großflächige Beleuchtung am Boden gewährleistet. Das erlaubt zwar die getrennte Optimierung von Sende- und Empfangszweig des SAR-Systems, erfordert jedoch zwei unterschiedliche Antennen und schränkt die Flexibilität dahingehend ein, das Radar in Moden wie ScanSAR und Spotlight sowie in neuartigen hybriden Moden zu betreiben. Daneben ist es mit den bekannten SAR-Systemen nicht möglich, die Sendeleistung gezielt und flexibel am Boden zu verteilen, was speziell bei den großen Streifenbreiten in den betrachteten Systemen von Nachteil ist.

Alle bekannten SAR-Systeme zur Abbildung eines breiten Streifens bei gleichzeitiger hoher geometrischer Auflösung besitzen eine große Empfangsantenne. Diese wird jedoch nicht für Sendezwecke genutzt, obwohl es für die Unterdrückung von Mehrdeutigkeiten und zur Erzielung eines höheren Gewinns hilfreich wäre, von der großen Antennenfläche auch sendeseitig zu profitieren. Der Einsatz einer gemeinsamen Sende- und Empfangsantenne würde darüber hinaus die Verwendung bewährter T/R-Technologie (Sende-Empfangs-Umschaltung) ermöglichen.

Wie bereits erwähnt, können bei bekannten SAR-Systemen Azimut-Mehrdeutigkeiten durch eine geeignete Signalverarbeitung der einzelnen Empfangssignale unterdrückt werden. Hierzu ist es allerdings erforderlich, die PRF an die Geschwindigkeit der Trägerplattform und an die Antennenlänge anzupassen. Abweichungen von der optimalen PRF führen zu einer verminderten Unterdrückung der Mehrdeutigkeiten. Wenn nun aufgrund des Timings nur eine ungünstige PRF gewählt werden kann, führt dies zu einer Verschlechterung der Leistungsfähigkeit des SAR-Systems.

Zur Abbildung eines breiten Streifens wird bei den bekannten SAR-Systemen eine kleine Sendeantenne benötigt. Zur Kompensation des entgangenen Antennengewinns wird empfangsseitig eine große Antennenfläche mit vielen Empfangsaperturen in der Elevation benötigt. Hieraus ergeben sich aber sehr große Datenmengen, die gespeichert und zum Boden übertragen werden müssen. Einen Ansatz dahingehend, diese Datenrate zu reduzieren, bietet das in EP-B-1 241 487 angegebene Verfahren.

Hierbei wird in Echtzeit der Antennenstrahl so gesteuert, dass er dem erwarteten Verlauf des Radarechos am Boden nachgeführt wird. Daher muss nur noch das sich ergebende Ausgangssignal gespeichert werden, was die Datenmenge erheblich reduziert. Jedoch weist dieses Verfahren eine große Empfindlichkeit gegenüber der Topographie des abzubildenden Geländes auf, so dass Höhenunterschiede zu starken Verlusten der empfangenen Signalenergie führen können, da der Empfangsstrahl nicht mehr exakt in Richtung des Echos am Boden zeigt.

Radarsysteme mit mehreren Empfangskanälen in Flugrichtung können prinzipiell zur Bewegungsmessung genutzt werden. Beispiele in diesem Zusammenhang sind die Messung von Meeresströmungen und die großflächige Verkehrsüberwachung. Die erzielbare Messgenauigkeit ist dabei direkt proportional zum maximalen Abstand zwischen den Empfangsantennen. Zur Erzielung einer hohen Empfindlichkeit gegenüber langsamen Objektgeschwindigkeiten sind daher lange Antennenstrukturen notwendig. Diese sind jedoch mit einem erheblichen technischen Aufwand und daher mit hohen Kosten verbunden.

Aus US-A-2003/218565 und EP-A-1966630 (Dokument nach Art. 54 (3) EPÜ) ist jeweils ein SAR-Verfahren bekannt, bei dem eine senderseitige sowie eine empfangsseitige Sub-Apertur zum Aussenden von unabhängigen Wellen und zur empfangsseitigen Strahlformung eingesetzt werden.

Darstellung der Erfindung

Aufgrund ihres Aufnahmeprinzips weisen die bekannten herkömmlichen SAR-Systeme, die an sich in der Erdbeobachtung bei einer Vielzahl von Anwendungen flexibel einsetzbare Fernerkundungsinstrumente sind, demnach eine grundlegende Beschränkung auf, die es unmöglich macht, große Gebiete abzubilden und dabei gleichzeitig eine hohe geometrische Auflösung zu erzielen.

Aufgabe der vorliegenden Erfindung ist es, diese grundlegenden Grenzen der herkömmlichen SAR-Systeme zu überwinden und die Leistungsfähigkeit zukünftiger abbildender SAR-Systeme so zu steigern, dass damit ein breiter Bodenstreifen, also ein großes Gebiet, abgebildet und gleichzeitig eine hohe geometrische Auflösung erzielt werden kann.

Zur Lösung dieser Aufgabe wird ein SAR-System mit den Merkmalen des Anspruchs 1 vorgeschlagen. Verschiedene Ausgestaltungen der Erfindung sind jeweils Gegenstand der Unteransprüche.

Gemäß der Erfindung, die sich auf ein Synthetik-Apertur-Seitensicht-Radarsystem der eingangs genannten Art bezieht, wird diese Aufgabe dadurch gelöst, dass die Sendeantenne aus mehreren Sub-Aperturen besteht, die Sendeelemente bilden und innerhalb jedes einzelnen Sendeimpulses so angesteuert werden, dass sich eine raumzeitlich nicht-separierbare mehrdimensionale Hochfrequenz-Wellenform als Sendesignal-Impulsform ergibt, derart, dass die Modulation eines jeden Sendeimpulses eine raumzeitliche Diversität aufweist, die sich nicht durch das Produkt voneinander unabhängiger Funktionen, die von jeweils nur einer räumlichen Dimension abhängen, beschreiben lässt, und dass die so erzeugte Sendesignal-Impulsform mit der empfangsseitigen räumlichen Filterung mittels einem auf diese Sendesignal-Impulsform abgestimmten "Digital Beamforming" kombiniert ist.

Die vorliegende Erfindung löst die gestellte Aufgabe mithin durch den Einsatz von raumzeitlich nichtseparierbaren, mehrdimensionalen Wellenformen als Sendesignal. Das bedeutet, dass die Modulation innerhalb eines Sendepulses eine neuartige räumliche Diversität aufweist, die bisher in SAR-Systemen nicht bekannt ist. Daraus ergibt sich die vorteilhafte Möglichkeit, zusätzliche Informationen über die Richtung des reflektierten Signals zu erhalten. Diese Informationen können gemäß der vorliegenden Erfindung in Kombination mit digitaler Strahlformung ("Digital Beamforming") im Empfangszweig dazu genutzt werden, eine hohe geometrische Auflösung bei gleichzeitiger Abbildung eines breiten Bodenstreifens zu realisieren.

Darüber hinaus ist es hierdurch möglich, die Leistungsfähigkeit zukünftiger abbildender Radarsysteme im Vergleich zu konventionellen SAR-Systemen deutlich zu erhöhen. Beispiele hierfür sind die verbesserte Ausleuchtung des Zielgebiets, erweiterte Möglichkeiten zur Detektion bewegter Objekte, eine deutliche Reduktion der Datenrate ohne Informationsverlust oder die adaptive Verteilung der Sendeleistung. Die vorliegende Erfindung bietet auch den Schlüssel für die Implementierung hybrider Radarabbildungsmoden, bei denen die verfügbaren Ressourcen ungleichmäßig auf die abzubildende Szene verteilt werden. Hierdurch ist es möglich, bestimmte Szenenausschnitte mit erhöhter geometrischer und/oder radiometrischer Auflösung zu beobachten, ohne eine weite Überdeckung, wie sie beispielsweise von einer Hintergrundmission mit mäßiger Anforderung an die Auflösung gefordert wird, zu verlieren.

In vorteilhafter Weise ist die aus mehreren Sub-Aperturen bestehende Sendeantenne mit der mehrere Unterantennen aufweisenden Empfangsantenne, die "Digital Beamforming" ermöglicht, baulich kombiniert.

Die einzelnen Sendeelemente und damit Sub-Aperturen im Azimut und/oder in der Elevation der Sendeantenne innerhalb eines Sendeimpulses können entweder unter Variation der jeweiligen Phasenkoeffizienten oder aber auch durch separate Funktionsgeneratoren so angesteuert werden, dass sich Radarsendeimpulse mit einer raumzeitlich nicht-separierbaren Wellenform ergeben.

Es lassen sich aber auch einzelne oder zugleich mehrere Sendeelemente und damit Sub-Aperturen im Azimut und/oder in der Elevation der Sendeantenne innerhalb eines Sendeimpulses sequentiell so ansteuern, dass sich Radarsendeimpulse mit einer raumzeitlich nicht-separierbaren Wellenform ergeben.

Vorteilhafte und zweckmäßige Weiterbildungen des Verfahrens nach der Erfindung sind in den Unteransprüchen angegeben, die sich unmittelbar oder mittelbar auf den Patentanspruch 1 beziehen.

Beschreibung der Zeichnungen

Die vorliegende Erfindung und Ausführungsbeispiele davon werden nachfolgend anhand von Zeichnungen erläutert. Es zeigen:

Fig.1 in schematischer Ansicht ein bereits eingangs be- schriebenes konventionelles SAR System, bei dem sich ein Sensor mit konstanter Geschwindigkeit $v_s$ entlang der Azimutrichtung bewegt und dabei mit einer Puls- wiederholfrequenz PRF Impulse aussendet, die am Boden einen Streifen der Breite $L_{Swath}$ abdekken,

Fig.2 ein ebenfalls bereits vorher erläutertes Multi-Aper- tur-System zur Abbildung breiter Streifen mit hoher geometrischer Auflösung gemäß dem Stand der Technik, wobei sich die Sende- und Empfangsantenne auf der gleichen Trägerplattform befinden und die Empfangsan- tenne unterteilt ist und sowohl im Azimut als auch in der Elevation aus mehreren Antennenelementen besteht, wogegen die Sendeantenne nur aus einem Element besteht, das in seinen Abmessungen den Einzelelementen der Empfangsantenne entspricht,

Fig.3 ein Beispiel für den Fall eines Sendeimpulses eines herkömmlichen SAR-Systems, wobei die Modulation die- ses Impulses keine raumzeitliche Diversität aufweist,

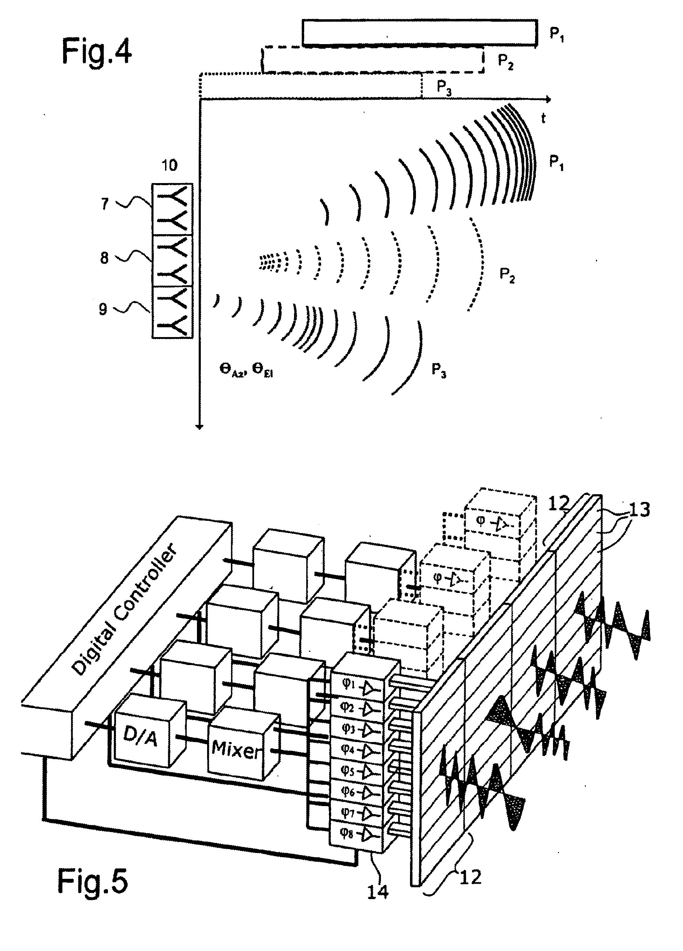

Fig. 4 ein Beispiel für den allgemeinen Fall eines Sendeim- pulses, der gemäß der vorliegenden Erfindung eine raumzeitlich nicht-separierbare Wellenform aufweist und aus drei Sub-Impulsen besteht, die sich ei- nerseits zeitlich überlappen und andererseits je nach Azimut- und/oder Elevationsrichtung (charakterisiert durch die Winkel $\theta_{Az}$ und $\theta_{E1}$) eine unterschiedliche Modulation aufweisen,

Fig. 5 die mögliche Ausführungsform einer gemäß der vorlie- genden Erfindung ausgebildeten Multi-Apertur-Sendean- tenne für mehrdimensionale raumzeitliche Puls- codierung, wobei diese Ausführungsform als beispielhaft für nachfolgende Ausführungsbeispiele betrachtet werden kann und vier Unterelemente im Azimut zeigt, die jeweils durch einen eigenen Funktionsgenerator gespeist werden, und die Ansteuerung der Sub-Apertu- ren in der Elevation zudem über separate regelbare Phasenschieber erfolgt, um die Strahlformung und - steuerung in Elevationsrichtung zu ermöglichen,

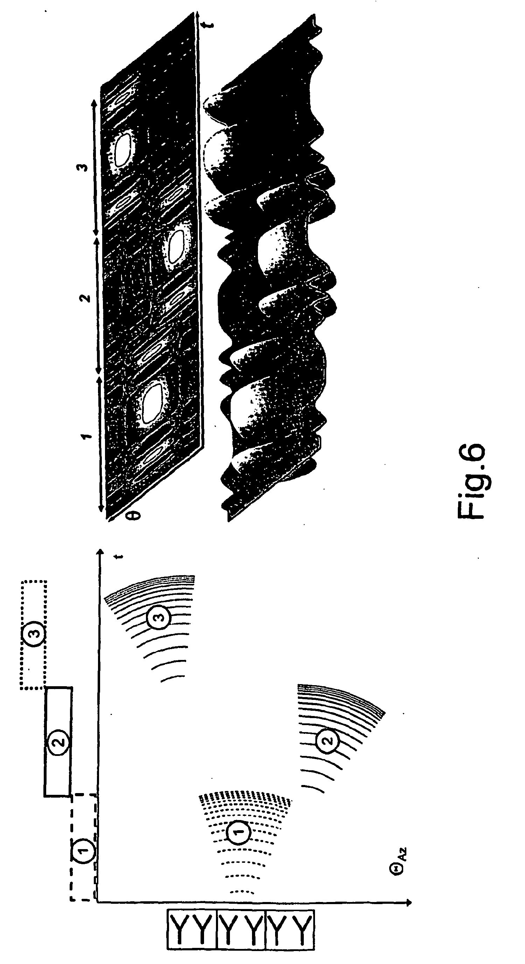

Fig.6 eine schematische (links) und eine räumliche (rechts) Darstellung einer räumlich nicht-separierbaren Wel- lenform, die aus drei Unter- Impulsen in Entfernungs- richtung ("t") be- steht, deren Amplituden-Maximum je- weils in unterschiedliche Azimutrichtungen ("$\Theta_{Az}$") gesteuert wird, wobei sich der Sendeimpuls somit aus drei schmalen Azimutstrahlen zusammensetzt, die se- quentiell angesteuert werden,

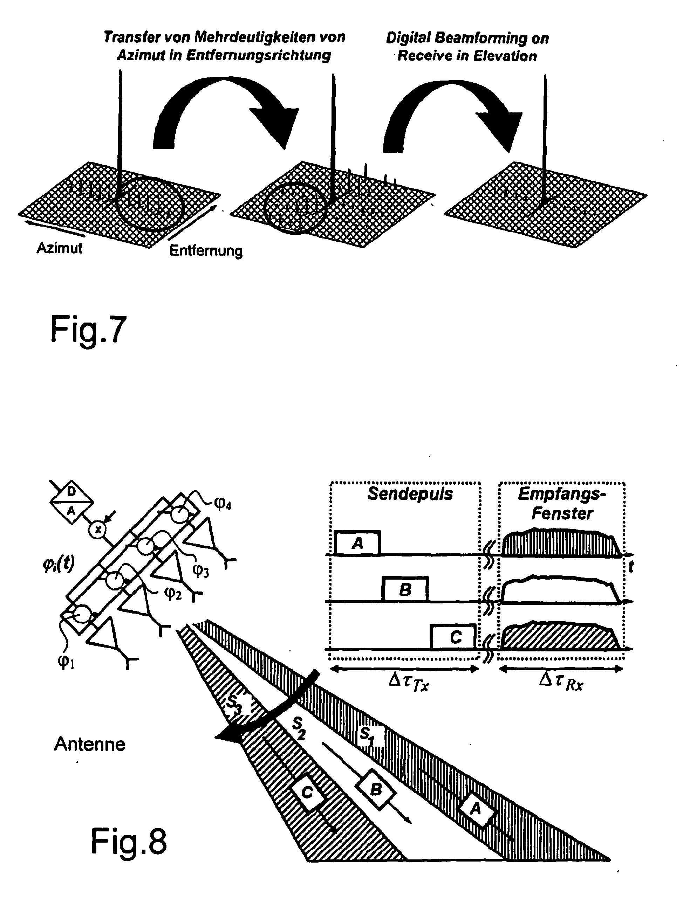

Fig.7 die Verteilung und Unterdrückung der Energie der Azi- mut-Mehrdeutigkeiten in Entfernungsrichtung durch die erfindungsgemäße Verwendung nicht-separierbarer, mehrdimensionaler Wellenformen, wobei das linke Bild die Punktzielantwort eines konventionellen "Digital Beamforming"-Systems mit vier Empfangsaperturen und nur einer Sendeapertur zeigt, die Graphik in der Mit- te die Verteilung der Energie in Entfernungsrichtung durch die Verwendung von vier Sendeaperturen und der speziellen Sendeimpulsform, wie sie in Fig.6 schema- tisch dargestellt wurde, zeigt und das Bild rechts die resultierende Punktzielantwort zeigt, nachdem die in Entfernungsrichtung verteilte Energie durch "Beam- forming on Receive" in der Elevation unterdrückt wur- de, woraus hervorgeht, dass die verbleibende Energie der Azimut-Mehrdeutigkeiten im Gegensatz zu Systemen, die nur "Digital Beamforming on Receive" verwenden, deutlich reduziert ist,

Fig.8 die zeitabhängige elevationsmäßige Variation des Ab- strahlwinkels des Sendeimpulses, die einen gleichzei- tigen Empfang der jeweiligen Echos zur Folge hat, wo- bei im gezeigten Beispiel der abzubildende Bereich am Boden durch drei Teilstrahlen abgedeckt wird, die se- quentiell innerhalb eines Sendeimpulses in Richtung des jeweilig zugehörigen Elevationswinkels gesteuert werden,

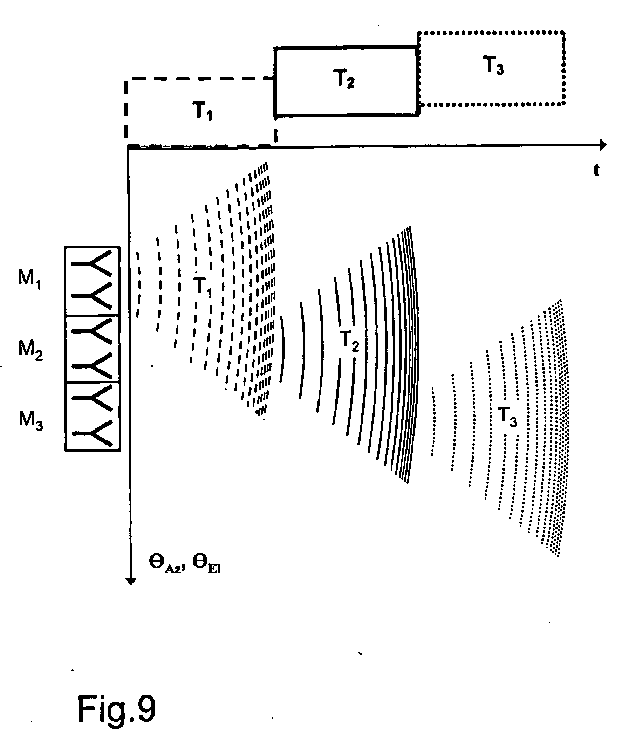

Fig.9 die Wellenform eines Sendeimpulses mit räumlich se- quentieller "Codierung", wobei der dargestellte Fall die sequentielle Ansteuerung dreier Sendemodule und die drei zugehörigen, ausgesendeten Teilimpulse zeigt,

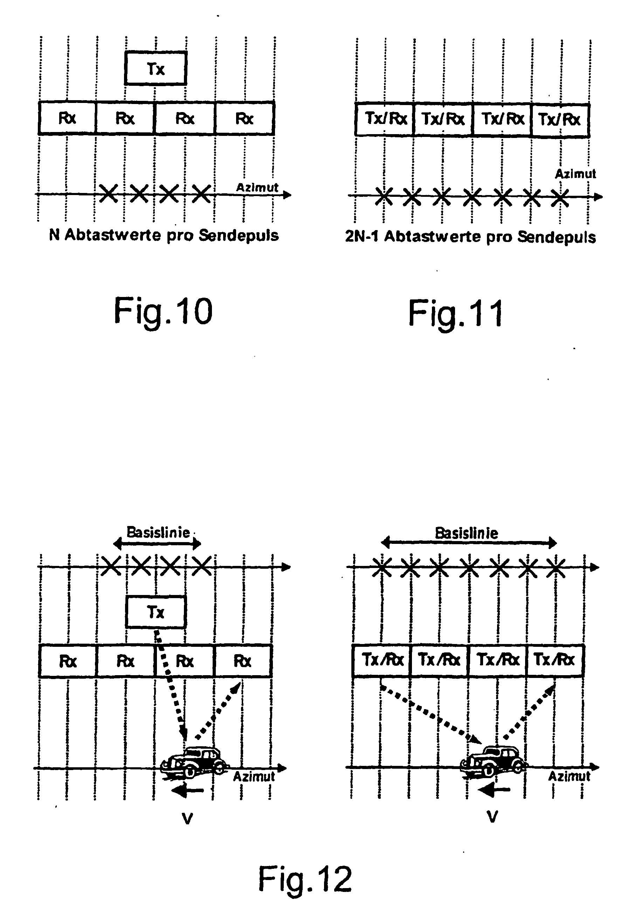

Fig. 10 die effektiven Phasenzentren und somit Abtastwerte im Azimut für eine konventionelle Kombination von einfa- cher Sendeantenne (Tx) und Multi-Apertur-Empfangsan- tenne (Rx) mit N Empfangselementen, so dass sich pro Sendeimpuls N Abtastwerte ergeben,

Fig. 11 die effektiven Phasenzentren und somit Abtastwerte in Azimutdimension für N Tx/Rx-Module, die jeweils mit sequentiellem "Code" senden, so dass sich in diesem Fall pro Sendeimpuls 2N-1 Abtastwerte ergeben, und

Fig. 12 die effektiven Phasenzentren und die sich daraus er- gebende maximale Basislinie für den konventionellen Fall (links) und unter Verwendung sequentieller Im- pulsformen innerhalb eines Sendeimpulses (rechts), so dass sich im Vergleich zum konventionellen Fall eine Verdoppelung der Länge der Basislinie durch die Ver- wendung von raumzeitlich nicht-se- parierbaren Sendeim- pulsen ergibt.

<u>Beschreibung der Erfindung</u>

Grundlage der vorliegenden Erfindung ist ein SAR-System, das mit nicht-separierbaren, mehrdimensionalen Wellenformen als Sendesignal betrieben wird. Das bedeutet, dass die Modulation eines Hochfrequenz- Sendeimpulses eine raumzeitliche Diversität aufweist, die sich nicht durch das Produkt voneinander unabhängiger Funktionen, welche von jeweils nur einer räumlichen Dimension abhängen, beschreiben lässt. Dabei ist von großer Bedeutung, dass diese Modulation innerhalb eines einzigen Sendeimpulses erfolgt.

In diesem Zusammenhang wird zur Verdeutlichung auf Fig.4 hingewiesen, in der ein Beispiel für den allgemeinen Fall eines Sendeimpulses dargestellt ist, der von mehreren Sub-Aperturen 7, 8, 9 einer Sendeantenne 10 ausgeht und eine raumzeitlich nicht-separierbare Wellenform aufweist und aus drei Sub-Impulsen $P_1$, $P_2$, $P_3$ besteht, die sich einerseits zeitlich überlappen und andererseits je nach Azimut- und/oder Elevationsrichtung (charakterisiert durch die Winkel $\theta_{Az}$ und $\theta_{E1}$) eine unterschiedliche Modulation aufweisen.

Mathematisch lässt sich der Unterschied gegenüber der in Fig.3 dargestellten herkömmlichen Art der Modulation ohne raumzeitliche Diversität folgendermaßen verdeutlichen. Bisher war es möglich, den von einer Sendeantenne 11 mit einer einzigen Sendeapertur aus- gehenden Sendeimpuls $P_0$ in Abhängigkeit des Azimut- winkels $\theta_{Az}$, des Elevationswinkels $\theta_{E1}$ und der Zeit $t$ wie folgt zu beschreiben: $w(\theta_{Az}, \theta_{El}, t) = w_1(\theta_{Az}) \cdot w_2(\theta_{El}) \cdot w_2(t)$. Bei der durch die Erfindung vorgeschlagenen Form der Modulation ist diese Aufspaltung bzw. Separierung in einzelne Faktoren, welche die Modulation in jeder der Raumzeitrichtungen ($\theta_{Az}$, $\theta_{El}$, $t$) beschreiben, nicht mehr möglich, woraus die Bezeichnung der raumzeitlich nicht- separierbaren Wellenform herrührt.

Das durch die vorliegende Erfindung vorgeschlagene SAR-System basiert auf einer Sendeantenne, die aus mehreren Sub-Aperturen besteht und mit einer Empfangsantenne kombiniert wird, die "Digital Beamforming" ermöglicht. Die einzelnen Sendeelemente werden nun innerhalb eines Sendeimpulses entweder unter Variation der jeweiligen Phasenkoeffizienten oder durch separate Funktionsgeneratoren so angesteuert, dass sich Radarimpulse mit einer raumzeitlich nicht-separierbaren Wellenform ergeben. Eine weitere Möglichkeit ist die sequentielle Ansteuerung von Teilaperturen während eines Impulses. Bei all diesen Verfahren ist es von Vorteil, eine baulich kombinierte Sende- und Empfangsantenne zu verwenden, um von der vollen Größe und Komplexität der ohnehin vorhandenen Empfangsantenne zu profitieren.

Von großer Bedeutung ist die erfindungsgemäße Kombination dieser neuartigen Sendeimpulsform mit einer empfangsseitigen räumlichen Filterung mittels digitaler Strahlformung durch die Empfangsantenne ("Digital Beamforming on Receive"). Denn erst die Verbindung einer räumlich nicht-separierbaren Wellenform als Sendeimpuls mit einer auf diesen Impuls abgestimmten empfangseitigen "Verarbeitung" durch eine geeignete Strahlformung ermöglicht es, vollen Nutzen aus der Sendeimpulsform zu ziehen und die Leistungsfähigkeit bisheriger Systeme entscheidend zu verbessern.

Bekannte SAR-Systeme nutzen lediglich auf der Empfängerseite Multi-Apertur-Antennen, aber sehen keine solche Komplexität der Sendeantenne und der sich daraus ergebenden Möglichkeiten zur gezielten raumzeitlichen Beeinflussung des Sendeimpulses vor, wie dies bei der vorliegenden Erfindung der Fall ist. Es gibt folglich bislang noch kein Verfahren, das mehrdimensionale, raumzeitlich nicht-separierbare Wellenformen in einem Multi-Apertur-SAR-System zur Untererdrückung von Mehrdeutigkeiten und zur Verbesserung der Leistungsfähigkeit einsetzt.

Fig.4 zeigt das grundsätzliche Prinzip der Erfindung im Vergleich zum Stand der Technik, der in Fig. 3 dargestellt ist. Fig.3 zeigt schematisch die bestehende Sendeantennenform für SAR-Systeme mit Monoapertur und deren emittierte Wellenformen. Im Vergleich dazu zeigt Fig.4 schematisch das neue Konzept gemäß der Erfindung anhand einer beispielhaften mehrdimensionalen Wellenform. Die zu den jeweiligen Systemen gehörenden Empfangsantennen sind nicht dargestellt, da beide Fälle auf Multi-Apertur-Empfängern basieren, welche die Möglichkeit einer empfangsseitigen Strahlformung (Beamforming) bieten.

Fig.5 zeigt in schematischer Schrägansicht eine mögliche Ausführungsform für eine Sendeantenne eines SAR-Systems nach der vorliegenden Erfindung. Eine solche Sendeantenne kann in den nachfolgenden Ausführungsbeispielen in vorteilhafter und beispielhafter Weise Anwendung finden.

Es handelt sich hierbei um eine Multi-Apertur-Sendeantenne für mehrdimensionale raumzeitliche Pulscodierung. Die Ausführungsform enthält vier Unterelemente 12 im Azimut, die jeweils durch einen eigenen Funktionsgenerator gespeist werden. Die Ansteuerung der Sub-Aperturen 13 in der Elevation erfolgt zudem über separate regelbare Phasenschieber 14, um die Strahlformung und -steuerung in Elevationsrichtung zu ermöglichen.

Infolge der Verwendung von raumzeitlich nicht-separierbaren, mehrdimensionalen Wellenformen im Azimut kann eine deutlich verbesserte Unterdrückung von Azimut-Mehrdeutigkeiten erreicht werden. Hierzu werden die ausgesandten Wellenformen derart gestaltet, dass die Radarechos aus unterschiedlichen Raumwinkeln bei ansonsten gleichen Streueigenschaften zu unterschiedlichen Empfangssignalen führen und daher im Empfänger voneinander getrennt werden können. Von besonderer Bedeutung ist hierbei eine raumzeitliche Codierung der ausgesandten Wellenform, bei der die Radarechos von Streuern mit gleicher Entfernung, aber unterschiedlichen Raumwinkeln am Empfänger zeitlich versetzt eintreffen.

Hierdurch ergibt sich auch ein zeitlicher Versatz zwischen dem gewünschten Signal und den hierzu korrespondierenden Azimut-Mehrdeutigkeiten. Ein solcher zeitlicher Versatz ist jedoch gleichbedeutend damit, dass zu einem gegebenen Zeitpunkt bei einem schräg nach unten blickenden Radar die Mehrdeutigkeiten aus einem anderen Elevationswinkel als das gewünschte Signal eintreffen. Damit kann durch die empfangsseitige räumliche Filterung mittels "Digital Beamforming on Receive" in der Elevation die Energie der Mehrdeutigkeiten deutlich reduziert oder sogar vollständig unterdrückt werden.

Im folgenden wird die Anwendung einer solchen Wellenform zur Unterdrückung von Mehrdeutigkeiten an einem Beispiel detailliert dargestellt. Hierzu zeigt Fig.6 eine nicht-separierbare Wellenform im Azimut. Man erkennt links in der schematischen Darstellung und rechts in der räumlichen Darstellung einen Sendeimpuls der aus drei Teilimpulsen in Entfernungsrichtung ("t") besteht. Dieser Impuls wird durch die kohärente Überlagerung der Signale aller Sendemodule erzeugt, die alle gleichzeitig senden. Jeder Teilimpuls weist dabei eine andere Amplitudenverteilung in Azimutrichtung ("$\theta_{Az}$") auf.

Es werden also innerhalb eines Impulses mehrere schmale Azimut-Strahlen gesendet, die jeweils nur einen Teil des Azimut-Spektrums beleuchten und somit die Azimut-Bandbreite in jedem der Teilimpulse beschränken. Dieses Vorgehen kann als eine Art Bandpaszerlegung im Azimut interpretiert werden. Im Empfangszweig des Radarsystems äußert sich das in einer relativen Zeitverschiebung des Echos eines Zieles, je nachdem von welchem der Azimut-Strahlen das Echo hervorgerufen wird.

Diese Zeitverschiebung äußert sich in den aufgenommenen Daten als Unterschied in der Entfernungsrichtung und führt im Gegensatz zu Fig.7, links, in der die Punktzielantwort eines konventionellen "Digital Beamforming"-SAR-Systems mit vier Empfangsaperturen

EP 2 018 577 B1

und nur einer Sendeapertur dargestellt ist, zu einer Verteilung der Energie der Azimut-Mehrdeutigkeiten in Entfernungsrichtung, vgl. dazu Fig.7, Mitte.

Durch "Beamforming on Receive" lassen sich nun die Echos von unterschiedlichen Azimut-Strahlen aufgrund der Zeitverschiebung deutlich trennen und die in Entfernungsrichtung bisher nur verteilte Energie kann unterdrückt werden, vgl. Fig.7, rechts. Nun können die Echos der unterschiedlichen Azimut-Strahlen kombiniert werden, um die komplette Azimut-Bandbreite wiederherzustellen und somit die volle geometrische Auflösung in Azimutrichtung zu ermöglichen. Diese Art der Signalverarbeitung kann als Signal-Rekonstruktion einer Mehrkanal-Bandpass-Zerlegung interpretiert werden.

Die Graphik in Fig.7, Mitte verdeutlicht somit die Verteilung der Energie in Entfernungsrichtung durch die Verwendung von vier Sendeaperturen und der speziellen Sendeimpulsform, wie sie in Fig.6 schematisch dargestellt ist. Fig.7, rechts zeigt die resultierende Punktzielantwort, nachdem die in Entfernungsrichtung verteilte Energie durch "Beamforming on Receive" in der Elevation unterdrückt wurde. Die verbleibende Energie der Azimut-Mehrdeutigkeiten ist deutlich reduziert im Gegensatz zu Systemen die nur "Digital Beamforming on Receive" verwenden.

Eine weitere vorteilhafte Möglichkeit, nämlich die Herbeiführung einer Reduktion der aufzuzeichnenden Datenmenge, eröffnet die Steuerung des Sendestrahls innerhalb eines Sendeimpulses in Elevationsrichtung. Anschaulich bedeutet dies, dass mittels der Antennenelemente in der Elevation ein schmaler Sendestrahl gebildet wird, der während der Sendeimpulsdauer über das Zielgebiet "wandert" und somit insgesamt einen breiten Bodenstreifen beleuchten kann.

Das ermöglicht eine zeitverzögerte Beleuchtung unterschiedlicher Entfernungsbereiche mit schmalen Sendestrahlen. Dies kann beispielsweise dazu genutzt werden, dass die empfangenen Echos aus unterschiedlichen Entfernungen zeitlich zusammenfallen. Dabei verharrt der Sendestrahl jedoch lange genug auf jedem Zielgebiet, um es mit der gesamten Bandbreite des Sendesignals zu beleuchten. Die gleichzeitig eintreffenden Signale aus unterschiedlichen Richtungen können nun wiederum mit Hilfe von "Digital Beamforming on Receive" in der Elevation voneinander getrennt werden.

Da bei diesem Verfahren die Signale aus unterschiedlichen Richtungen zeitlich zusammenfallen, kann eine deutliche Verkürzung des Empfangsfensters erreicht werden. Dies erleichtert einerseits das Timing des SAR-Systems und sorgt andererseits für eine deutliche Reduktion der aufzuzeichnenden Datenmenge. Im Vergleich zu dem früher vorgeschlagenen Verfahren einer empfangsseitigen Strahlformung in Echtzeit bietet die Durchführung der hier vorgestellten sendeseitigen Strahlformung eine größere Robustheit gegenüber der Topographie des abgebildeten Geländes.

Während im Fall der zeitabhängigen Strahlformung im Empfangszweig eine falsche Zuordnung von Strahlwinkel und Zeit zu massiven Verlusten der Signalenergie führen kann, wird im Fall der sendeseitigen Realisierung eines zeitabhängigen Abstrahlwinkels die gesamte gesendete Energie immer auch empfangen. Einschränkungen ergeben sich bei starken Schwankungen in der Topographie höchstens durch eine Verlängerung des Zeitintervalls, in welchem alle Radarechos empfangen werden. Einer solchen Schwankung lässt sich durch eine leichte Verlängerung des Empfangsfensters wirksam begegnen, was gleichbedeutend mit einer geringen Erhöhung der allerdings bereits stark reduzierten Datenmenge ist.

Diese Erhöhung ist im Vergleich zur konventionellen Verarbeitung jedoch unerheblich. Gegenüber der in EP 1 241 487 B1 vorgeschlagenen Nachführung des Empfangsstrahls in Echtzeit ergeben sich zwei Vorteile, nämlich zum einen, dass es keine Signaldämpfung bzw. vollständige Signalauslöschung durch Topographie gibt, und zum anderen, dass der hohe technische Aufwand für eine Echtzeitsignalverarbeitung im Empfänger vermieden wird.

Darüber hinaus reduziert die Verwendung eines sehr langen Sendeimpulses und eines vergleichsweise kurzen Empfangsfensters die notwendige Spitzenleistung der Radarimpulse erheblich. Dies hat grundlegende Bedeutung für das technische Design des Senders und ermöglicht den Einsatz kostengünstigerer elektronischer Bauelemente. Ein weiterer Vorteil eines derart ausgelegten SAR-Systems besteht darin, dass eine große Sendeantenne zur Ausleuchtung eines breiten Streifens genutzt werden kann.

Fig.8 zeigt ein Beispiel für das vorher erläuterte System mit drei unterschiedlichen Ausprägungen A, B, C des Sendestrahls während ein einziger Impuls über die Sendeimpulsdauer $\Delta\tau_{Tx}$ gesendet wird. Dabei ist die zeitliche Abhängigkeit dergestalt gewählt, dass die in Fig. 8 rechts oben dargestellte zeitliche Überlappung der während der Dauer $\Delta\tau_{Rx}$ des Empfangsfensters empfangenen Echos gewährleistet ist. Es handelt sich also um eine zeitabhängige Variation des Abstrahlwinkels in der Elevation. Eine solche zeitabhängige Variation hat einen gleichzeitigen Empfang der jeweiligen Echos zur Folge hat. Im gezeigten Beispiel wird der abzubildende Bereich am Boden durch drei Teilstrahlen $S_1$, $S_2$, $S_3$ abgedeckt, die sequentiell innerhalb eines Sendeimpulses in Richtung des jeweilig zugehörigen Elevationswinkels gesteuert werden.

Ein entsprechend der Erfindung ausgebildetes SAR-System ermöglicht auch eine Erhöhung der Abtastrate. Dazu wird der Sendeimpuls durch das sequentielle Ansteuern der einzelnen Sendeelemente erzeugt, d.h. es senden innerhalb eines Gesamtimpulses alle Sendeelemente, aber in jedem Teilimpuls immer nur eines gleichzeitig. Im Gegensatz zu der vorher beschriebenen Ausführungsform des erfindungsgemäßen SAR-Systems wird der Sendeimpuls somit nicht als die kohärente Überlagerung der Einzelimpulse aller Sendeelemente interpretiert, die zusammen ein gewünschtes

8

Antennendiagramm ergeben, sondern es kann - nach einer geeigneten räumlichen Filterung des Empfangssignals mittels "Digital Beamforming on Receive" - jedes Sendeelement als quasi-selbständiger Sender interpretiert werden.

Im folgenden wird ein einfaches und anschauliches Ausführungsbeispiel für eine Antenne mit drei unabhängigen Sendemodulen gegeben, die drei Sendeelementen entsprechen. Die sich ergebende Wellenform ist schematisch in Fig.9 verdeutlicht. Fig.9 zeigt die Wellenform eines Sendeimpulses mit räumlich sequentieller "Codierung". Der dargestellte Fall zeigt die sequentielle Ansteuerung der Sendemodule $M_1$, $M_2$ und $M_3$ und die zugehörigen, ausgesendeten Teilimpulse $T_1$, $T_2$ und $T_3$.

SAR-Systeme mit räumlich getrenntem Sender und Empfänger können als ein virtuelles System interpretiert werden, bei dem die Positionen von Sender und Empfänger zusammenfallen und in der Mitte zwischen den tatsächlichen Orten von Sende- und Empfangsapertur liegen. Dieser Ort wird als effektives Phasenzentrum einer Sende-Empfangskombination bezeichnet.

Dadurch, dass zu einem bestimmten Zeitpunkt immer nur eine der Sendeaperturen aktiv ist, werden die sich aus dem Teilimpuls der jeweiligen Sendeapertur ergebenden reflektierten Echos eines bestimmten Zieles zu unterschiedlichen Zeitpunkten empfangen. Diese unterschiedlichen Echos können dann durch eine geeignete empfangsseitige Verarbeitung getrennt werden. So lässt sich schließlich das Sendeantennen-Array als in mehrere eigenständige Sender unterteilt interpretieren, wie es in Fig.11 dargestellt ist. Durch die verschiedenen Möglichkeiten der Kombination von Sende- und Empfangsapertur ergeben sich daraus die durch "x" gekennzeichneten Abtastwerte pro Sendeimpuls, die den effektiven Phasenzentren aller möglichen Kombinationen von Sender und Empfänger entsprechen.

Fig.10 zeigt die effektiven Phasenzentren und somit Abtastwerte im Azimut für eine konventionelle Kombination von einfacher Sendeantenne (Tx) und Multi-Apertur Empfangsantenne (Rx) mit $N$ Empfangselementen. Es ergeben sich hier pro Sendeimpuls $N$ Abtastwerte. Fig.11 dagegen zeigt die effektiven Phasenzentren und somit Abtastwerte in Azimutdimension für $N$ Tx/Rx-Module, die jeweils mit sequentiellem "Code" senden. In diesem Fall ergeben sich pro Sendepuls $2N$-1 Abtastwerte.

Man erkennt, dass sich im Vergleich zu einem herkömmlichen SAR-System, das in Fig.10 dargestellt ist und $N$ (= Anzahl der Empfangsaperturen) Abtastwerte aufweist, nun $2 \cdot N$-1 Abtastwerte ergeben, wobei $N$ die Anzahl der unabhängig betriebenen T/R-Module angibt. Dies entspricht einer Erhöhung der Abtastrate um den

Faktor $\dfrac{2 \cdot N - 1}{N}$ ($\approx$ 2 für große N).

Diese erhöhte Abtastrate kann nun in mehrfacher Hinsicht genutzt werden. Sie kann z.B. verwendet werden, um die Auflösung zu erhöhen, ohne die Azimut-Mehrdeutigkeiten zu verstärken, oder umgekehrt, um bei konstanter Auflösung eine verbesserte Unterdrückung der Azimut-Mehrdeutigkeiten zu ermöglichen.

Ein weiterer Aspekt ist in Fig.12 dargestellt. Er ergibt sich aus dem maximalen Abstand zwischen zwei Abtastwerten, die sich für den Empfang eines ausgesandten Impulses mit mehreren Aperturen ergeben. Diese so genannte Basislinie beschreibt die Empfindlichkeit des Systems bezüglich der Detektion bzw. Bestimmung von bewegten Objekten. Wie in Fig.12 zu erkennen ist, verdoppelt sich die Länge dieser Basislinie durch die Verwendung der speziellen Sendeimpulsform.

Da insbesondere bei herkömmlichen Systemen, die sich auf einer Trägerplattform befinden, diese Basislinie häufig zu kurz ist, um wirksam bewegte Objekte zu detektieren und Geschwindigkeiten zu bestimmen, ergibt sich aus der Längenverdoppelung der Basislinie eine deutlich verbesserte Möglichkeit der Bewegtzielerkennung. Umgekehrt kann ein dediziertes Radarsystem zur Bewegungsmessung mit dem durch die vorliegende Erfindung hier vorgestellten System deutlich kompakter gebaut werden.

Fig.12 zeigt im Einzelnen die effektiven Phasenzentren, die mit "x" gekennzeichnet sind, und die sich daraus ergebende maximale Basislinie für den konventionellen Fall (links) und unter Verwendung sequentieller Pulsformen innerhalb eines Sendeimpulses (rechts). Im Vergleich zum konventionellen Fall ergibt sich die bereits erwähnte Verdoppelung der. Länge der Basislinie durch die Verwendung von raumzeitlich nicht-separierbaren Sendeimpulsen. Es wird in beiden Fällen die Geschwindigkeit v eines bewegten Objekts bestimmt.

Die Verwendung von raumzeitlich nicht-separierbaren Wellenformen gemäß der vorliegenden Erfindung ermöglicht eine gezielte Ausleuchtung des Zielgebiets, wobei durch unterschiedliche Verweildauern des Sendestrahls in bestimmten Teilgebieten eine bessere räumliche Auflösung und/oder eine höhere radiometrische Empfindlichkeit erzielt werden kann. Hierdurch wird es möglich, Teilgebieten von größerer Bedeutung mehr Systemressourcen zuzuweisen, ohne andere Gebiete wie im konventionellen Spotlight-Modus völlig aus dem Blickfeld zu yerlieren.

Diese Flexibilität gestattet den Betrieb von Synthetik-Apertur-Radarsystemen in hybriden Moden bei denen beispielsweise einerseits kontinuierlich große Flächen abgebildet und andererseits auf spezifischen Kundenwunsch hin Detailaufnahmen von begrenzten Teilgebieten angefertigt werden sollen. Die Gebiete, denen mehr Ressourcen zugewiesen werden, können sogar adaptiv ausgewählt werden. Ein einfaches Beispiel ist die Optimierung des Signal/Rausch-Verhältnisses SNR durch eine dynamische Anpassung der raumzeitlichen Wellenform an die Auswertung der empfangenen Signalleistung für einzelne Teilgebiete.

Ganz unabhängig hiervon ermöglicht die weitgehende Entkopplung von Antennengröße und Ausdehnung des beleuchteten Gebiets am Boden die Verwendung einer großen Sendeantenne mit hohem Gewinn. Zusammen mit der zuvor dargestellten Verlängerung der Sendeimpulsdauer ergibt sich hieraus die Möglichkeit, mit einer insgesamt höheren Sendeleistung bzw. einer geringeren Spitzenleistung pro Fläche/Sendemodul zu operieren. All dies trägt zu einer deutlichen Leistungsverbesserung zukünftiger SAR-Radarsysteme bei.

Bei einem entsprechend der vorliegenden Erfindung ausgebildeten SAR-System werden also in vorteilhafter Weise durch die raumzeitlich nicht-separierbaren Wellenformen eine flexible "Verteilung" der Signalenergie am Boden und - in Kombination mit "Digital Beamforming on Receive" - eine verbesserte Unterdrückung von Mehrdeutigkeiten, eine effektive Datenreduktion, eine Erhöhung der räumlichen Abtastrate, eine erhöhte Empfindlichkeit für Bewegungsmessungen, kompaktere Satellitenstrukturen und eine Vereinfachung der Systemauslegung erreicht. Dadurch wird es möglich gemacht, SAR-Systeme mit höherer geometrischer Auflösung und großer Bodenstreifenbreite auf effektivste Weise zu verwirklichen.

Bezugszeichenliste

| | |
|---|---|
| 1 | Träger |
| 2 | Bodenstreifen |
| 3 | Auftrefffläche |
| 4 | Antennenkeule |
| 5 | Sendeantenne |
| 6 | Empfangsantenne |
| 7, 8, 9 | Sub-Aperturen |
| 10 | Sendeantenne |
| 11 | Sendeantenne mit einziger Apertur |
| 12 | Unterelemente im Azimut |
| 13 | Sub-Aperturen in der Elevation |
| 14 | Regelbare Phasenschieber |
| A, B, C | Ausprägungen des Sendestrahls |
| $L_{Swath}$ | Streifenbreite |
| $M_1, M_2, M_3$ | Sendemodule |
| $P_0$ | Sendeimpuls |
| $P_1, P_2, P_3$ | Sub-Impulse |
| PRF | Pulswiederholfrequenz |
| Rx | Empfänger |
| $S_1, S_2, S_3$ | Teilstrahlen |
| $t_0, t_1, t_2$ | Impulsaussendezeiten |
| $T_1, T_2, T_3$ | Teilimpulse |
| Tx | Sender |
| v | Geschwindigkeit |
| $v_s$ | Geschwindigkeit des Trägers |
| $\Delta t$ | Zeitlicher Abstand zwischen Impulsen |
| $\Delta t_{Rx}$ | Dauer des Empfangsfensters |
| $\Delta\tau_{Tx}$ | Sendeimpulsdauer |

**Patentansprüche**

1. Hochauflösendes Synthetik-Apertur-Seitensicht-Radarsystem auf einem sich mit konstanter Geschwindigkeit über der Erdoberfläche bewegenden Träger, auf dem eine orthogonal zur Bewegungsrichtung schräg nach unten blickende Sendeantenne (10), die aus mehreren, räumlich getrennten Sub-Aperturen (7, 8, 9) besteht, eine entsprechend orthogonal zur Bewegungsrichtung schräg nach unten blickende, in mehrere räumlich getrennte Unterantennen unterteilte Empfangsantenne und eine kohärent arbeitende Radarvorrichtung angeordnet sind, die über die Sendeelemente bildenden Sub-Aperturen der Sendeantenne Hochfrequenzsignale unabhängiger Wellenformen aussendet und die über die räumlich getrennten Unterantennen der Empfangsantenne in mehreren Empfangskanälen Echosignale der ausgesendeten Hochfrequenzsignale empfängt, **dadurch gekennzeichnet,**

   - **dass** die Wellenformen, die von den Sub-Aperturen (7, 8, 9) der periodisch Hochfrequenzimpulse mit einer Pulswiederholfrequenz aussendenden Sendeantenne (10) ausgehen allesamt jeweils innerhalb eines einzelnen Hochfrequenzimpulses in unterschiedlichen Raumrichtungen zeitlich versetzt ausgesendet werden, so dass sich als Sendesignal-Impulsform eine raumzeitlich nicht-separierbare mehrdimensionale Hochfrequenz-Wellenform pro Hochfrequenzimpuls ergibt, und
   - **dass** die über die in Azimut- und/oder in Elevationsrichtung in mehrere Unterantennen unterteilte Empfangsantenne in den Empfangskanälen empfangenen Echosignale zur Erlangung einer räumlichen Filterung in Form zusätzlicher Richtungsinformationen nach Art des Digital Beamforming digital verrechnet werden und die sendeseitig erzeugte Sendesignal-Impulsform mit der empfangsseitigen räumlichen Filterung mittels dem Digital Beamforming dieser Sendesignal-Impulsform kombiniert ist.

2. Radarsystem nach Anspruch 1, **dadurch gekennzeichnet, dass** die aus mehreren Sub-Aperturen (7, 8, 9) bestehende Sendeantenne (10) mit der mehrere Unterantennen aufweisenden Empfangsantenne, die das Digital Beamforming ermöglicht, baulich kombiniert ist.

3. Radarsystem nach Anspruch 1 oder 2, **dadurch gekennzeichnet, dass** die einzelnen Sendeelemente und damit Sub-Aperturen (7, 8, 9) der Sendeantenne (10) im Azimut und/oder der Elevation innerhalb eines Sendeimpulses unter Variation der jeweiligen Phasenkoeffizienten durch separate Funktionsgeneratoren oder sequentiell zur Erzeugung von Radarsendeimpulsen mit einer raumzeitlich nicht-separierbaren Wellenform angesteuert sind.

**4.** Radarsystem nach einem der vorhergehenden Ansprüche, **dadurch gekennzeichnet, dass** die Sendeantenne als eine Multi-Apertur-Sendeantenne für mehrdimensionale raumzeitliche Pulscodierung ausgebildet ist, die n jeweils durch einen eigenen Funktionsgenerator gespeiste Unterelemente (12) im Azimut und pro Azimutspalte m Sub-Aperturen (13) in der Elevation enthält, deren Ansteuerung über separate regelbare Phasenschieber (14) für die Strahlformung und -steuerung in Elevationsrichtung erfolgt.

**5.** Radarsystem nach einem der vorhergehenden Ansprüche, **dadurch gekennzeichnet, dass** zur verbesserten Unterdrückung von Azimut-Mehrdeutigkeiten raumzeitlich nicht-separierbare, mehrdimensionale Wellenformen im Azimut verwendet werden, die derart gestaltet sind, dass die Radarechos aus unterschiedlichen Raumwinkeln bei ansonsten gleichen Streueigenschaften zu unterschiedlichen Empfangssignalen führen und daher im Empfänger voneinander trennbar sind.

**6.** Radarsystem nach Anspruch 5, **dadurch gekennzeichnet, dass** eine raumzeitliche Codierung der ausgesandten Wellenform vorgesehen ist, bei der die Radarechos von Streuern mit gleicher Entfernung, aber unterschiedlichen Raumwinkeln am Empfänger zeitlich versetzt eintreffen und sich damit auch ein zeitlicher Versatz zwischen dem gewünschten Signal und den hierzu korrespondierenden Azimut-Mehrdeutigkeiten ergibt, was gleichbedeutend damit ist, dass zu einem gegebenen Zeitpunkt bei einem schräg nach unten blickenden Radar die Mehrdeutigkeiten aus einem anderen Elevationswinkel als das gewünschte Signal eintreffen und somit durch die empfangsseitige räumliche Filterung mittels eines Digital Beamforming on Receive in der Elevation die Energie der Mehrdeutigkeiten deutlich reduzierbar oder sogar vollständig unterdrückbar ist.

**7.** Radarsystem nach Anspruch 5 und 6, **dadurch gekennzeichnet,**

- **dass** der Sendeimpuls durch die kohärente Überlagerung der Signale aller Sendeelemente erzeugt wird, die alle gleichzeitig senden,
- **dass** jeder Teilimpuls dabei eine andere Amplitudenverteilung in Azimutrichtung ("$\theta_{Az}$") aufweist und somit innerhalb eines Impulses mehrere schmale Azimut-Strahlen gesendet werden, die jeweils nur einen Teil des Azimut-Spektrums beleuchten und daher die Azimut-Bandbreite in jedem der Teilimpulse nach Art einer Bandpasszerlegung im Azimut beschränken, was sich im Empfangszweig des Radarsystems, je nachdem, von welchem der Azimut-Strahlen das Echo hervorgerufen wird, in einer relativen Zeitverschiebung des Echos eines Zieles äußert, die sich in den aufgenommenen Daten als Unterschied in der Entfernungsrichtung äußert und zu einer Verteilung der Energie der Azimut-Mehrdeutigkeiten in Entfernungsrichtung führt,
- **dass** durch empfangsseitiges Beamforming die Echos von unterschiedlichen Azimut-Strahlen aufgrund der Zeitverschiebung getrennt werden und die in Entfernungsrichtung verteilte Energie unterdrückt wird und
- **dass** die Echos der unterschiedlichen Azimut-Strahlen nach Art einer Signal-Rekonstruktion einer Mehrkanal-BandpassZerlegung kombiniert werden, um die komplette Azimut-Bandbreite wiederherzustellen und somit die volle geometrische Auflösung in Azimutrichtung zu ermöglichen.

**8.** Radarsystem nach einem der Ansprüche 1 bis 4, **dadurch gekennzeichnet, dass** der Sendestrahl innerhalb eines Sendeimpulses in Elevationsrichtung gesteuert wird, so dass mittels der Antennenelemente in der Elevation ein schmaler Sendestrahl gebildet wird, der während der Sendeimpulsdauer über das Zielgebiet wandert und somit insgesamt einen breiten Bodenstreifen beleuchtet, was eine zeitverzögerte Beleuchtung unterschiedlicher Entfernungsbereiche mit schmalen Sendestrahlen ergibt.

**9.** Radarsystem nach Anspruch 8, **dadurch gekennzeichnet, dass** durch die Steuerung des Sendestrahls die empfangenen Echos aus unterschiedlichen Entfernungen zeitlich zusammenfallen, wobei der Sendestrahl lange genug auf jedem Zielgebiet verharrt, um es mit der gesamten Bandbreite des Sendesignals zu beleuchten, und dass die gleichzeitig eintreffenden Signale aus unterschiedlichen Richtungen mit Hilfe von empfangsseitigem Digital Beamforming in der Elevation voneinander getrennt werden.

**10.** Radarsystem nach Anspruch 8 und 9, **dadurch gekennzeichnet, dass** ein vergleichsweise zur Dauer des Radarsendeimpulses zeitlich stark verkürztes Empfangsfenster vorgesehen ist und insbesondere das Empfangsfenster zeitlich derart lang bemessen ist, dass in seinem Öffnungszeitintervall alle Radarechos empfangen werden.

**11.** Radarsystem nach einem der Ansprüche 1 bis 4, **dadurch gekennzeichnet, dass** der Sendeimpuls durch ein sequentielles Ansteuern der einzelnen Sendeelemente entsprechend einem sequentiellen Code erzeugt wird, wobei innerhalb eines Gesamtimpulses alle Sendeelemente senden, aber in jedem Teilimpuls immer nur eines gleichzeitig, und dass nach einer geeigneten räumlichen Filterung des Empfangssignals mittels des Digital Beamforming jedes Sendeelement als quasi-selbständiger Sender interpretierbar ist.

**12.** Radarsystem nach Anspruch 11, **dadurch gekennzeichnet, dass** die sich aus dem Teilimpuls des jeweiligen Sendeelements ergebenden reflektierten Echos eines bestimmten Zieles, die zu unterschiedlichen Zeitpunkten empfangen werden, durch eine geeignete empfangsseitige Verarbeitung getrennt werden.

**13.** Radarsystem nach Anspruch 11 oder 12, **dadurch gekennzeichnet, dass** unter Ausnutzung der Basislinie, die dem maximalen Abstand zwischen zwei Abtastwerten entspricht, die sich für den Empfang eines ausgesandten Impulses mit mehreren Sendeelementen ergeben, und die durch die Verwendung der speziellen Sendeimpulsform verlängert ist, eine Detektion bzw. Bestimmung von bewegten Objekten erfolgt.

**14.** Radarsystem nach einem der vorhergehenden Ansprüche, **dadurch gekennzeichnet, dass** eine gezielte Ausleuchtung des Zielgebiets vorgesehen ist, so dass durch unterschiedliche Verweildauern des Sendestrahls in bestimmten Teilgebieten und/oder durch Variation der Systemressourcen, eine bessere räumliche Auflösung und/oder eine höhere radiometrische Empfindlichkeit erzielt wird, wobei Teilgebiete von größerer Bedeutung, denen mehr Systemressourcen zugewiesen sind als Gebieten von geringerer Bedeutung adaptiv auswählbar sind und ein Betrieb in hybriden Moden vorgesehen werden kann, bei denen gleichzeitig große Flächen abgebildet und Detailaufnahmen von begrenzten Teilgebieten angefertigt werden.

**15.** Radarsystem nach Anspruch 14, **gekennzeichnet durch** eine Optimierung des Signal/Rausch-Verhältnisses SNR **durch** eine dynamische Anpassung der raumzeitlichen Wellenform an die Auswertung der empfangenen Signalleistung für einzelne Teilgebiete.

**Claims**

**1.** A high-resolution synthetic aperture side view radar system on a carrier moving above the earth surface at a constant speed, the carrier being provided with a transmission antenna (10) directed obliquely downward orthogonal to the direction of movement and formed by a plurality of spatially separated sub-apertures (7, 8, 9), a receiving antenna correspondingly directed obliquely downward orthogonal to the direction of movement and subdivided into a plurality spatially separated sub-antennas, and with a coherently operating radar device emitting high frequency signals of independent waveforms via the sub-apertures of the transmission antenna forming the transmission elements and receiving echo signals of the transmitted high frequency signals in a plurality of receiving channels via the spatially separated sub-antennas of the receiving antenna, **characterized in that**

- the waveforms, which come from the sub-apertures (7, 8, 9) of the transmission antenna (10) periodically transmitting high frequency pulses at a pulse repetition frequency, are all transmitted within a single high frequency pulse in different spatial directions in a time-staggered manner, so that a spatiotemporally non-separable multi-dimensional high-frequency waveform is obtained per high-frequency pulse, and
- the echo signals, which are received in the receiving channels via the receiving antenna subdivided in the azimuth and/or elevation direction into a plurality of sub-antennas, are digitally set off against each other according to digital beamforming in order to achieve a spatial filtering in the form of additional direction information and the transmission signal pulse form produced on the transmitting side is combined with the receiving-side spatial filtering by means of the digital beam-forming of this transmission signal pulse form.

**2.** The radar system of claim 1, **characterized in that** the transmission antenna (10) formed by a plurality of sub-apertures (7, 8, 9) is structurally combined with the receiving antenna that comprises a plurality of sub-antennas and allows for "digital beamforming".

**3.** The radar system of claim 1 or 2, **characterized in that**, within a transmission pulse, the individual transmission elements, and thus the sub-apertures (7, 8, 9), of the transmission antenna (10) are controlled in the azimuth and/or the elevation by varying the respective phase coefficients, by separate function generators or sequentially such that radar transmission pulses with a spatiotemporally non-separable waveform are obtained.

**4.** The radar system of one of the preceding claims, **characterized in that** the transmission antenna is configured as a multi-aperture transmission antenna for multi-dimensional spatiotemporal pulse coding, including n subelements (12) in the azimuth, each supplied by a function generator of its own, and m sub-apertures (13) in the elevation per azimuth column, which are controlled through separate controllable phase shifters (14) to allow the forming and controlling of the beam in the elevation direction.

5. The radar system of one of the preceding claims, **characterized in that**, for an improved suppression of azimuth ambiguities, spatiotemporally non-separable multi-dimensional waveforms are used in the azimuth, which are designed such that the radar echoes from different spatial angles, with otherwise similar scattering properties, lead to different received signals and are therefore separable from each other in the receiver.

6. The radar system of claim 5, **characterized in that** a spatiotemporal coding of the emitted waveform is provided, where the radar echoes from scattering objects at the same distance but at different spatial angles arrive at the receiver chronologically offset so that also a chronological offset between the desired signal and the azimuth ambiguities corresponding thereto is obtained, which is equivalent to the fact that, at a given time, with a radar directed obliquely downward, the ambiguities arrive under another elevation angle than the desired signal, so that the energy of the ambiguities can be significantly reduced or even be completely suppressed by the receiving-side spatial filtering by means of digital beam-forming on receive in the elevation.

7. The radar system of claims 5 and 6, **characterized in that**

- the transmission pulse is generated by the coherent superposition of the signals of all transmission elements which all transmit at the same time,
- each partial pulse comprises a different amplitude distribution in the azimuth direction ("$\theta_{Az}$") and a plurality of narrow azimuth beams are thus transmitted within a pulse which each only illuminate a part of the azimuth spectrum and therefore limit the azimuth bandwidth in each of the partial pulses in the manner of a band pass splitting in the azimuth, which, depending on which of the azimuth beams causes the echo, materializes in the receiving branch of the radar system as a relative time-shift of the echo from a target, which time-shift shows in the recorded data as a difference in the range direction and causes a distribution of the energy of the azimuth ambiguities in the range direction,
- by beam-forming on the receiving side, the echoes of different azimuth beams are separated by the time-shift and the energy distributed in the range direction is suppressed, and
- the echoes of the different azimuth beams are combined in the manner of a signal reconstruction of a multi-channel band pass splitting, in order to restore the complete azimuth bandwidth and to thus allow for the full geometric resolution in the azimuth direction.

8. The radar system of one of claims 1 to 4, **characterized in that** the transmission beam is controlled in the elevation direction within one transmission pulse, so that the antenna elements form a narrow transmission beam in the elevation that wanders across the target area during the duration of the transmission pulse, thereby, on the whole, illuminating a wide ground swath which results in a time-delayed illumination of different range areas with narrow transmission beams.

9. The radar system of claim 8, **characterized in that** the transmission beam control is effected such that the echoes received from different directions coincide chronologically, wherein the transmission beam dwells on each target area long enough to illuminate it with the entire band width of the transmission signal, and that the signals from different directions that arrive simultaneously are separated from each other using receiving-side digital beam-forming in the elevation.

10. The radar system of claims 8 and 9, **characterized in that** a receiving window is provided that is greatly reduced in duration as compared to the duration of the radar transmission pulse, and **in that**, in particular, the duration of the receiving window is calculated to be so long that all radar echoes are received within its opening time interval.

11. The radar system of one of claims 1 to 4, **characterized in that** the transmission pulse is generated by sequentially controlling the individual transmission elements according to a sequential code, wherein all transmission elements transmit within a total pulse, but only one at a time in each partial pulse, and that after an appropriate spatial filtering of the received signal by means of digital beam-forming, each transmission element can be interpreted as a quasi-independent transmitter.

12. The radar system of claim 11, **characterized in that** the reflected echoes of a certain target, which result from a partial pulse of the respective transmission pulse and are received at different times, are separated by an appropriate processing on the receiving side.

13. The radar system of claim 11 or 12, **characterized in that** a detection or determination of moving objects is achieved by using the so-called base line that corresponds to the maximum distance between two sampled values that are obtained for the reception of an emitted pulse with a plurality of transmission elements, and which is extended by the use of the special transmission pulse form.

14. The radar system of one of the preceding claims, **characterized in that** a purposeful illumination of the target area is provided, so that a better spatial resolution and/or a higher radiometric sensitivity is achieved by different dwelling times of the transmission beam in certain partial areas and/or by a variation in the system resources, e.g. the bandwidth, wherein partial areas of greater importance, to which are allocated more system resources than to areas of lesser importance, can be selected adaptively, and wherein an operation in hybrid modes can be provided, in which modes, at the same time, large areas are mapped and detail pictures of limited partial areas are made.

15. The radar system of claim 14, **characterized by** an optimization of the signal-to-noise ratio SNR by a dynamic adaptation of the spatiotemporal waveform to the evaluation of the received signal power for individual partial areas.

**Revendications**

1. Système radar haute résolution à visée latérale sur un porteur se déplaçant à vitesse constante au-dessus de la surface de la terre, sur lequel porteur sont disposés une antenne émettrice (10) orientée obliquement vers le bas dans une direction orthogonale par rapport à la direction de déplacement, formée par plusieurs sous-apertures (7, 8, 9) séparées spatialement, une antenne réceptrice orientée, de manière correspondante, obliquement vers le bas dans une direction orthogonale par rapport à la direction de déplacement, et divisée en plusieurs sous-antennes séparées spatialement, et un dispositif de radar cohérent, qui émet des signaux de haute fréquence de formes d'onde indépendantes par lesdites sous-apertures de ladite antenne émettrice formant les éléments émetteurs, et qui, par lesdites sous-antennes de ladite antenne réceptrice séparées spatialement, reçoit dans plusieurs canaux de réception des signaux écho des signaux de haute fréquence émises, **caractérisé en ce que**

- toutes les formes d'onde émanant des sous-apertures (7, 8, 9) de ladite antenne émettrice (10), périodiquement émettant des impulsions de haute fréquence avec une fréquence de répétition impulsionnelle, sont chacune émises dans une seule impulsion de haute fréquence respective dans des directions spatiales différentes et avec un décalage temporel, de sorte que l'on obtient, par impulsion de haute fréquence, une forme d'onde de haute fréquence à multiples dimensions non-séparable sur le niveau spatiotemporel comme forme d'impulsion du signal d'émission, et
- les signaux écho, reçus dans les canaux de réception par ladite antenne réceptrice divisée en plusieurs sous-antennes dans la direction azimutale et/ou d'élévation, sont compensés numériquement par une mise en forme de faisceau numérique pour obtenir un filtrage spatial sous forme des informations directionnelles additionnelles, et la forme d'impulsion du signal d'émission, générée côté émetteur, est combinée avec le filtrage spatial, côté récepteur, à l'aide de ladite mise en forme de faisceau numérique de ladite forme d'impulsion du signal d'émission.

2. Système radar selon la revendication 1, **caractérisé en ce que** ladite antenne émettrice (10) formée par plusieurs sous-apertures (7, 8, 9) est combinée structurellement avec ladite antenne réceptrice comprenant plusieurs sous-antennes et permettant la mise en forme de faisceau numérique.

3. Système radar selon les revendications 1 ou 2, **caractérisé en ce que** les éléments émetteurs individuels, et par cela les sous-apertures (7, 8, 9) de ladite antenne émettrice (10), sont commandées dans l'azimut et/ou dans l'élévation pendant une impulsion d'émission en variation des coefficients de phase respectifs, la commande étant effectuée par des générateurs de fonctions séparés ou séquentiellement pour générer des impulsions d'émission de radar avec une forme d'onde non-séparable sur le niveau spatiotemporel.

4. Système radar selon l'une quelconque des revendications précédentes, **caractérisé en ce que** ladite antenne émettrice est configurée comme une antenne émettrice à multiples apertures pour le codage d'impulsions multidimensionnel spatiotemporel, qui comprend n sous-éléments (12) dans l'azimut, respectivement alimentés par un générateur de fonctions propre, et m sous-apertures (13) par colonne azimutale dans l'élévation, qui sont commandées par l'intermédiaire de déphaseurs (14) réglables séparés pour la mise en forme et la commande de faisceau dans la direction de l'élévation.

5. Système radar selon l'une quelconque des revendications précédentes, **caractérisé en ce que**, pour une suppression améliorée des ambigüités azimutales, l'on utilise dans l'azimut des formes d'onde multidimensionnelles, non-séparables sur le niveau spatiotemporel, qui sont formées de sorte que les échos de radar venant d'angles spatiaux différents résultent, étant donné, pour le reste, des propriétés de diffusion identiques, en signaux de réception différents et, pour cette raison, peuvent être séparées dans ledit récepteur.

6. Système radar selon la revendication 5, **caractérisé en ce qu'**un codage spatiotemporel de la forme d'onde émise est prévu, dans lequel les échos de radar arrivent au récepteur avec décalage temporel à partir d'objets diffuseurs à distances égales, mais des angles spatiaux différents, ce qui résulte aussi en un décalage temporel entre le signal désiré et les ambigüités azimutales correspondantes, ce qui est équivalent au fait qu'avec un radar orienté obliquement vers le bas à un moment donné, les ambigüités arrivent d'un autre angle d'élévation que le signal désiré et qu'il est ainsi possible de drastiquement réduire ou même supprimer l'énergie des ambigüités par le filtrage spatial, côté récepteur, par une mise en forme de faisceau numérique en réception dans l'élévation.

7. Système radar selon les revendications 5 et 6, **caractérisé en ce que**

- l'impulsion d'émission est généré par la superposition cohérente des signaux de tous les éléments émetteurs qui tous émettent simultanément,
- chaque impulsion partielle comprend une distribution d'amplitude différent dans la direction azimutale ("$\theta_{Az}$") et, pour cette raison, plusieurs faisceaux azimutaux étroits sont émis dans une impulsion, qui respectivement n'illuminent qu'une partie du spectre azimutal et ainsi limitent la largeur de bande azimutale dans chaque impulsion partielle à la manière d'une découpage de bande passante dans l'azimut, ce qui se traduit dans la branche de réception par un décalage temporel rélatif de l'écho d'un cible, dépendant du faisceau azimutal qui a causé ledit écho, le décalage se traduisant dans les données enregistrées par une différence de la direction de portée et résulte en une distribution de l'énergie des ambigüités dans la direction de portée,
- par mise en forme de faisceau, côté récepteur, les échos de deux faisceaux azimutaux différents sont séparés à cause du décalage temporel et l'énergie distribuée dans la direction de portée est supprimée, et
- les échos des faisceaux azimutaux sont combinés à la manière d'une reconstruction d'un signal d'un découpage de bande passante à multiples canaux, afin de reconstruire l'entièreté de la largeur de bande azimutale et d'ainsi permettre la résolution géométrique totale dans la direction azimutale.

8. Système radar selon l'une quelconque des revendications 1 à 4, **caractérisé en ce que** ledit faisceau d'émission est commandé dans la direction d'élévation pendant une impulsion d'émission, de sorte qu'un faisceau d'émission étroit est formé dans l'élévation par les éléments d'antenne, le faisceau se déplaçant à travers la zone visée et ainsi, en total, illuminant une étendue de terre large, ce qui résulte en une illumination retardée de différentes plages de portée par des faisceaux d'émission étroits.

9. Système radar selon la revendication 8, **caractérisé en ce que**, par la commande du faisceau d'émission, les échos reçus de différentes distances coïncident, ledit faisceau d'émission restant sur chaque zone visée suffisamment longtemps pour l'illuminer avec la largeur de bande totale dudit faisceau d'émission, et **en ce que** les signaux arrivant simultanément de différentes directions son séparés dans l'élévation par une mise en forme de faisceau numérique, coté récepteur.

10. Système radar selon les revendications 8 et 9, **caractérisé en ce qu'**il est prévu un intervalle de réception largement réduit par rapport à la durée de ladite impulsion d'émission de radar et que, notamment, ledit intervalle de réception étant d'une telle durée à permettre la réception de tous les échos de radar pendant ledit phase d'ouverture dudit intervalle.

11. Système radar selon l'une quelconque des revendications 1 à 4, **caractérisé en ce que** ladite impulsion d'émission est générée par la commande séquentielle desdits éléments émetteurs individuels selon un code séquentiel, chaque élément émetteur émettant pendant une impulsion totale, mais seulement un à la fois pendant chaque impulsion partielle, et **en ce qu'**après un filtrage spatial approprié dudit signal de réception par ladite mise en forme de faisceau numérique, chaque élément émetteur peut être interprété comme un émetteur quasi-indépendant.

12. Système radar selon la revendication 11, **caractérisé en ce que** les échos d'un certain cible résultant de ladite impulsion partielle d'un faisceau d'émission respectif, qui sont reçus à des moments différents, sont séparés par un traitement approprié, côté récepteur.

13. Système radar selon les revendications 11 ou 12, **caractérisé en ce qu'**en utilisant la ligne de base qui correspond à la distance maximale entre deux échantillons obtenus pour la réception d'une impulsion émise par plusieurs éléments émetteurs, et qui est allongée par utilisation de ladite forme d'impulsion d'émission spéciale, l'on effectue une détection ou une détermination des objets mobiles.

14. Système radar selon l'une quelconque des revendications précédentes, **caractérisé en ce que** l'on prévoit une illumination ciblée de la zone cible, de sorte que par des temps de séjour différents du faisceau d'émission dans certaines zones partielles et/ou par variation des ressources du système, l'on obtient une meilleure résolution spatiale et/ou une sensibilité radiométrique élevée, **en ce qu'**il est possible de choisir d'une manière adaptative des zones partielles d'une plus grande importance auxquelles sont assignées plus de ressources du système qu'aux zones de moindre importance, et **en ce que** l'on peut prévoir un fonctionnement dans des modes hybrides dans lesquels des grandes surfaces sont reproduites et, simultanément, des détails de zone partielles limitées sont faites.

15. Système radar selon la revendication 14, **caractérisé par** l'optimisation du rapport signal-bruit SNR par une adaptation dynamique de la forme d'onde spatiotemporelle à l'évaluation de la puissance de signal reçue pour des zones partielles individuelles.

Fig.1

Fig.2

Fig.3

**Fig.4**

**Fig.5**

Fig.6

**Fig.7**

**Fig.8**

Fig.9

Tx

| Rx | Rx | Rx | Rx |

Azimut

N Abtastwerte pro Sendepuls

## Fig.10

| Tx/Rx | Tx/Rx | Tx/Rx | Tx/Rx |

Azimut

2N-1 Abtastwerte pro Sendepuls

## Fig.11

Basislinie

Tx

| Rx | Rx | Rx | Rx |

Azimut

V

Basislinie

| Tx/Rx | Tx/Rx | Tx/Rx | Tx/Rx |

Azimut

V

## Fig.12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1241487 B
- US 2003218565 A
- EP 1966630 A
- EP 1241487 B1


**In der Beschreibung aufgeführte Nicht-Patentliteratur**

- Multiple-Input multiple-output (MIMO) radar and imaging: degrees of freedom and resolution. **BLISS D W et al.** CONFERENCE RECORD OF THE 37TH. ASILOMAR CONFERENCE ON SIGNALS, SYSTEMS, & COMPUTERS. PACIFIC GROOVE, 09. November 2003
- *ASILOMAR CONFERENCE ON SIGNALS, SYSTEMS AND COMPUTERS,* 09. November 2003, vol. 1-2, ISBN 0-7803-8104-1, 54-59
- **Carrara W. ; Goodman R. ; Majewski R.** Spotlight Synthetic Aperture Radar: Signal Processing Algorithms. Artech House, 1995
- **A. Currie ; M.A. Brown.** Wide-Swath SAR. *IEE Proceedings - Radar Sonar and Navigation,* 1992, vol. 139 (2), 122-135
- **G. Krieger ; N. Gebert ; A. Moreira.** Unambiguous SAR Signal Reconstruction from Non-Uniform Displaced Phase Centre Sampling. *IEEE Geoscience and Remote Sensing Letters,* Oktober 2004, vol. 1 (4